(19) **Europäisches Patentamt / European Patent Office / Office européen des brevets**

(11) **EP 1 978 136 A1**

(12) **EUROPEAN PATENT APPLICATION**

(43) Date of publication:
08.10.2008 Bulletin 2008/41

(51) Int Cl.:
$C25D\ 9/08$ (2006.01)   $C25D\ 15/02$ (2006.01)
$C25B\ 11/03$ (2006.01)   $C25B\ 11/04$ (2006.01)
$H01G\ 9/042$ (2006.01)   $H01G\ 9/20$ (2006.01)
$H01L\ 31/0216$ (2006.01)   $H01L\ 31/0224$ (2006.01)
$H01L\ 31/0236$ (2006.01)

(21) Application number: 08005872.0

(22) Date of filing: 27.03.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 29.03.2007 JP 2007086254

(71) Applicant: TDK Corporation
Tokyo 103-8272 (JP)

(72) Inventors:
• Handa, Tokuhiko
  Tokyo 103-8272 (JP)
• Monden, Atsushi
  Tokyo 103-8272 (JP)

(74) Representative: Grünecker, Kinkeldey,
Stockmair & Schwanhäusser
Anwaltssozietät
Leopoldstrasse 4
80802 München (DE)

(54) **Dye-sensitized solar cell and method of manufacturing it**

(57)   There are disclosed an electrode having a large amount of a dye to be supported, having an excellent dye replacement property and having a capability of improving a photoelectric conversion efficiency, a manufacturing method of the electrode and a dye-sensitized solar cell including the electrode. An electrode 11 according to the present invention includes a dye-supported layer 14 laminated on a substrate 12 and including zinc oxide and a dye. The dye-supported layer 14 has at least a plurality of bump-like protrusions formed so that zinc oxide protrudes radially from the substrate 12, or satisfies represented by the following formula (1) : $2 \leq I_{002}/I_{101} \leq 12$, in which $I_{002}$ is a peak intensity attributed to a zinc oxide (002) face in X-ray diffraction measurement of the dye-supported layer 14, and $I_{101}$ is a peak intensity attributed to a zinc oxide (101) face in the X-ray diffraction measurement.

FIG. 1

EP 1 978 136 A1

**Description**

BACKGROUND OF THE INVENTION

Field of the Invention

The present invention relates to an electrode, a manufacturing method of the electrode, and a dye-sensitized solar cell including the electrode.

Description of the Related Art

In recent years, solar photovoltaic power generation has received attention as one of promising means for solving environmental problems as typified by exhaustion of fossil fuel resources and reduction of carbon dioxide emissions. As typical examples of solar cells, single-crystalline and polycrystalline silicon-based solar cells are previously put on the market and broadly known.
However recently, in the technical field, fear of short supply of silicon as a main material has enlarged, and it has been keen that a non-silicon-based solar cell (e.g., $CuInGaSe_2$ (CIGS) or the like) for the next generation be put to practical use.
As such a non-silicon-based solar cell, a dye-sensitized solar cell published by Gratzel et al. in 1991 has especially received attention because the cell is an organic solar cell capable of realizing a conversion efficiency of 10% or more. In recent years, application, development and research have intensively been performed in various research organizations at home and abroad. This dye-sensitized solar cell has a basic structure in which a redox electrolyte is sandwiched between an electrode and a counter electrode disposed so as to face the electrode. As the electrode, there is used a porous titanium oxide electrode having an adsorbed sensitizing dye and provided on a transparent conductive film of a transparent glass substrate. The titanium oxide electrode is prepared by coating the transparent conductive film with a coating solution in which titanium oxide particles are suspended, and firing the film at a temperature of about 300 to 500°C to allow the resultant film to adsorb the sensitizing dye.
On the other hand, in this type of dye-sensitized solar cell, from an industrial viewpoint of productivity improvement, it has been demanded that an inexpensive and lightweight plastic substrate having flexibility be employed as a member to replace the transparent glass substrate. However, as described above, a high temperature firing process is required for preparing the titanium oxide electrode, so that it has been difficult to employ a plastic substrate having a poor thermal resistance with respect to the glass substrate.
To solve this problem, for example, in Non-Patent Document 1, a dye-sensitized solar cell is suggested in which an electrode constituted of a metal oxide film such as porous zinc oxide is formed of an electrolyte containing a metal salt such as zinc chloride by use of a cathode electrolytic deposition process as a low temperature electrochemical technique, whereby the dye is adsorbed on the electrode. According to this technique, the porous metal oxide electrode can be prepared by performing the cathode electrolytic deposition using the electrolyte, so that the above-mentioned high temperature firing process required for manufacturing the solar cell having the above titanium oxide electrode can be omitted. However, on the other hand, the metal oxide electrode is formed and then allowed to adsorb the dye, so that a sufficient amount of the sensitizing dye cannot be adsorbed by the resultant dye-supported metal oxide electrode. Therefore, the photoelectric conversion efficiency cannot sufficiently be improved.
Therefore, to increase an amount of a dye to be supported in a zinc oxide electrode, for example, in Non-Patent Document 2, a method is suggested in which cathode electrolytic deposition is performed using a zinc nitrate bath including a water-soluble dye such as eosin-Y beforehand added thereto, whereby the water-soluble dye is co-adsorbed to form a hybrid thin film of zinc oxide/eosin-Y. Similarly, it is disclosed in Patent Document 1 that the cathode electrolytic deposition is performed using a zinc nitrate electrolyte including eosin-Y beforehand added thereto, whereby eosin-Y is co-adsorbed to form a porous zinc oxide electrode having a large specific surface area. Furthermore, a method is disclosed in Patent Document 2 in which a porous zinc oxide electrode including eosin-Y co-adsorbed by the surface of zinc oxide by the cathode electrolytic deposition is alkali-treated to once desorb the dye, and then the dye is re-adsorbed to support the dye on the surface of zinc oxide.
As described above, according to the cathode electrolytic deposition process in which the dye is added to the electrolyte, as compared with a case where any dye is not added, an amount of the dye to be co-adsorbed can be increased, and it is possible to obtain a zinc oxide film in which a crystal structure of zinc oxide is strongly oriented in a c-axis direction. The reason why zinc oxide is strongly oriented in the c-axis direction is supposedly that anisotropy is imparted to the crystal growth direction of zinc oxide owing to a function of preferentially adsorption of dye molecules by the surface other than a (002) face of zinc oxide
Then, the crystal structure of zinc oxide is strongly oriented in a c-axis, whereby an electron transport property of the zinc oxide electrode can be improved. With the increase of the amount of the dye to be co-adsorbed, it is expected that a photoelectric conversion efficiency of the electrode obtained as a photoelectric conversion element further improves.

[Patent Document 1] Japanese Patent Application Laid-Open No. 2002-184476
[Patent Document 2] Japanese Patent Application Laid-Open No. 2004-006235
[Non-Patent Document 1] S. Peulon et al., J. Electrochem. Soc., 145, 864 (1998)
[Non-Patent Document 2] T. Yoshida et al., Electrochemistry, 70, 470 (2002)

However, the dye-supported zinc oxide electrode prepared by the above-mentioned conventional cathode electrolytic deposition process added the dye unexpectedly has a poor sensitizing function of the co-adsorbed dye typified by eosin-Y, and the photoelectric conversion efficiency of the photoelectric conversion element using this electrode is insufficient yet. The electrode from which co-adsorbed eosin-Y is once desorbed and by which a highly sensitive sensitizing dye is re-adsorbed can be expected to realize higher photoelectric conversion efficiency. However, for an unclear detailed reason, the zinc oxide electrode strongly oriented along the c-axis has a low dye replacement property, and it is remarkably difficult to re-adsorb a sufficient amount of the highly sensitive sensitizing dye. As a result, the photoelectric conversion efficiency of the photoelectric conversion element cannot sufficiently be increased, and a higher performance is demanded so as to put the element to practical use.

SUMMARY OF THE INVENTION

The present invention has been developed in view of such a situation, and an object is to provide an electrode including a metal oxide layer having a large amount of a dye to be supported and an excellent dye replacement property and having a capability of improving a photoelectric conversion efficiency, a manufacturing method of the electrode, and a dye-sensitized solar cell.

To solve the above problem, the present inventors have intensively repeated researches, have eventually found a significant correlation between a c-axis orientation and denseness of zinc oxide and an adsorption site area of the dye, a desorption property of the co-adsorbed dye and a re-adsorption property of the sensitizing dye, and have completed the present invention.

That is, an electrode according to the present invention comprises a substrate; and a metal oxide layer having a dye-supported layer formed on the substrate, the dye-supported layer including zinc oxide and a dye, wherein the metal oxide layer satisfies a relation represented by the following formula (1):

$$2 \leq I_{002}/I_{101} \leq 12 \ ... \ (1),$$

in which $I_{002}$ is a peak intensity attributed to a zinc oxide (002) face in X-ray diffraction measurement of the metal oxide layer, and $I_{101}$ is a peak intensity attributed to a zinc oxide (101) face in the X-ray diffraction measurement. It is to be noted that stoichiometry of "zinc oxide" in the present invention is not limited to ZnO ($Zn_xO_y$, in which x=1, y=1).

Here, in the present specification, "the metal oxide layer is provided on the substrate" includes a configuration in which the metal oxide layer is provided on the substrate via an intermediate layer in addition to a configuration in which the metal oxide layer is directly provided on the substrate. Therefore, a specific configuration of the present invention includes both of a laminated structure in which the substrate directly comes in contact with the metal oxide layer as in the former configuration and a laminated structure in which the substrate is disposed away from the metal oxide layer as in the latter configuration.

As a result of measurement of a characteristic of a dye-sensitized solar cell including a counter electrode disposed so as to face the electrode having the above constitution and a charge transport layer provided between both of the electrodes, the present inventors have found that a conversion efficiency is remarkably improved as compared with a conventional technology. Details of a functional mechanism which produces such an effect are not clarified yet, but are presumed, for example, as follows.

That is, when a c-axis orientation of zinc oxide is excessively low, an amount of a supported dye to be co-adsorbed is insufficient. On the other hand, when the c-axis orientation of zinc oxide is excessively high, a film structure becomes excessively dense. It is supposed that it tends to be difficult to efficiently desorb the co-adsorbed dye and re-adsorb the dye. Compared with this, in the present invention, crystallinity of zinc oxide of the metal oxide layer is controlled so as to satisfy the relation represented by the above formula (1), that is to say, the c-axis orientation is controlled, whereby denseness of a film structure of the metal oxide layer can appropriately be reduced. In consequence, it is supposed that porosity can be obtained to such an extent that the dye (molecules) can physically move. As a result, the adsorption site area for the dye increases. In addition, the co-adsorption and the re-adsorption of the dyes can efficiently be made. However, the function is not limited to this example.

Alternatively, in other words, an electrode according to the present invention comprises a substrate; and a metal oxide layer having a dye-supported layer formed on the substrate, the dye-supported layer including zinc oxide and a dye, wherein the dye-supported layer has a plurality of bump-like (pine-cone-like as the case may be) protrusions formed so that zinc oxide radially protrudes from the surface of the substrate. As a result of analysis of the c-axis orientation of the metal oxide layer having the dye-supported layer with the bump-like protrusions in this manner, it has been confirmed that there is a remarkably high tendency that the relation represented by the above formula (1) is satisfied. It is to be noted that as described later, the plurality of bump-like protrusions of zinc oxide according to the present invention are formed so that the protrusions individually grow so as to rise.

On the other hand, in the conventional zinc oxide electrode having a high c-axis orientation, such bump-like protrusions are not formed. It has also been confirmed that the electrode of the present invention is significantly different in, for example, a sectional shape from the conventional electrode.

More specifically, in the dye-supported layer, it is preferable that at least a part of the dye is supported on the surface of zinc oxide. According to such a constitution, as compared with a case where, for example, the dye is occluded in a surface layer portion of zinc oxide, photo-sensitivity of the dye is improved. Moreover, electrons can more efficiently move between zinc oxide and the dye supported on the surface of zinc oxide, and a sensitizing function of the electrode as a photoelectric conversion element can be improved.

Furthermore, a dye-sensitized solar cell according to the present invention comprises the electrode according to the present invention; a counter electrode disposed so as to face the electrode; and a charge transport layer disposed between the electrode and the counter electrode.

In addition, a manufacturing method of an electrode according to the present invention is a method for effectively manufacturing the electrode of the present invention, comprising: a step of preparing a substrate; and a metal oxide layer forming step having a dye-supported layer forming step of forming a dye-supported layer including zinc oxide and a dye on the substrate, wherein the metal oxide layer forming step forms, as a metal oxide layer, a layer which satisfies a relation represented by the above formula (1) or a layer having a plurality of bump-like protrusions formed so that zinc oxide of the dye-supported layer radially protrudes from the surface of the substrate.

Alternatively, a manufacturing method of an electrode according to the present invention comprises a step of preparing a substrate and a counter electrode; and a metal oxide layer forming step having an electrolytic deposition step of forming, on the substrate, a dye-supported layer including zinc oxide and a first dye by electrolytic deposition, wherein the electrolytic deposition step arranges the substrate and the counter electrode so that the substrate faces the counter electrode in an electrolyte including zinc salt and the first dye and having a dye concentration of 50 to 500 $\mu$M, and applies a voltage of -0.8 to -1.2 V (vs. Ag/AgCl) between the substrate and the counter electrode, whereby zinc oxide is electrolytically deposited, and the dye is co-adsorbed to form the dye-supported layer.

Moreover, it is preferable that the method further comprises a dye desorption step of desorbing the first dye co-adsorbed on the dye-supported layer; and a dye re-adsorption step of allowing the dye-supported layer to support a second dye different from the desorbed dye.

According to the electrode, the manufacturing method of the electrode and the solar cell including the electrode of the present invention, a dye replacement property can be improved, and an amount of the dye to be supported can be increased, so that when this electrode is used as the photoelectric conversion element, high photoelectric conversion efficiency can be realized. Moreover, the zinc oxide layer can be formed at a low temperature without any high temperature firing process, so that productivity and economical efficiency can be improved. In addition, a plastic substrate or the like having a poor thermal resistance as compared with a glass substrate can be applied as the substrate. Therefore, the availability of materials (process tolerance) can be broadened, and the productivity and economical efficiency can further be improved.

BRIEF DESCRIPTION OF THE DRAWINGS

FIG. 1 is a schematic sectional view schematically showing one embodiment of an electrode according to the present invention;
FIGS. 2A to 2C are step diagrams showing that an electrode 11 is manufactured;
FIG. 3 is a schematic sectional view schematically showing one embodiment of a solar cell according to the present invention;
FIG. 4 is a sectional SEM photograph of the electrode according to Example 1;
FIG. 5 is a sectional SEM photograph of the electrode according to Example 3;
FIG. 6 is a sectional SEM photograph of the electrode according to Comparative Example 1; and
FIG. 7 is a sectional SEM photograph of the electrode according to Comparative Example 4.

DESCRIPTION OF THE PREFERRED EMBODIMENTS

Embodiments of the present invention will hereinafter be described. It is to be noted that the same element is denoted with the same reference numeral, and redundant description is omitted. Moreover, positional relations of top, bottom, left, right and the like are based on a positional relation shown in the drawings unless otherwise mentioned. Furthermore, a dimensional ratio of the drawing is not limited to a shown ratio. The following embodiment merely illustrates the present invention, and the present invention is not limited only to the embodiments.

(First Embodiment)

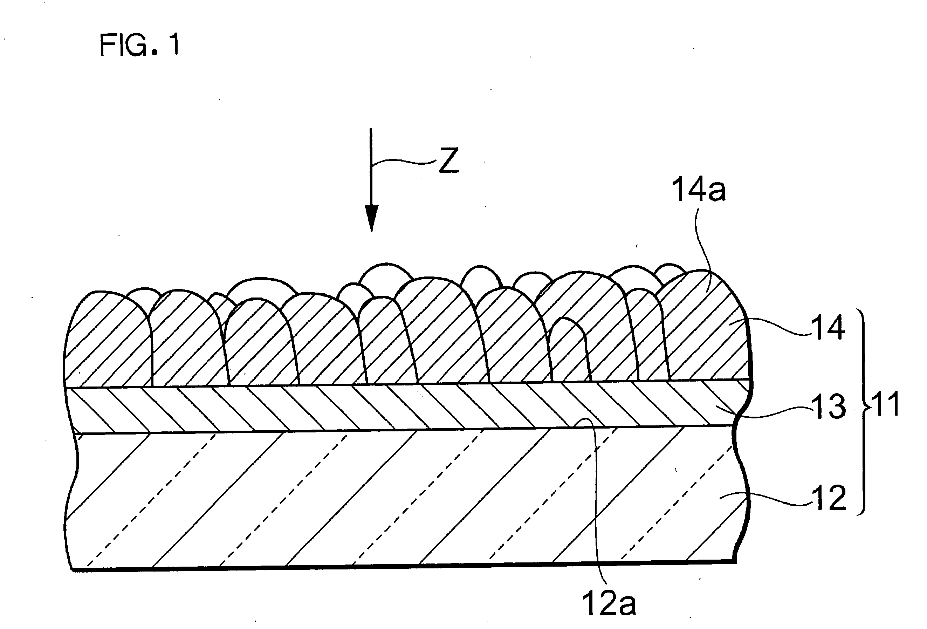

FIG. 1 is a schematic sectional view schematically showing one embodiment of an electrode according to the present invention. In an electrode 11, a porous dye-supported layer 14 including zinc oxide and a sensitizing dye is laminated on a substrate 12 having a conductive surface 12a. Thus, a metal oxide layer is constituted of the dye-supported layer 14.

There is not any special restriction on a type or a dimensional shape of the substrate 12 as long as the substrate can support at least the dye-supported layer 14. For example, a plate-like or sheet-like substrate is preferably used. In addition to a glass substrate, examples of the substrate include a plastic substrate of polyethylene terephthalate, polyethylene, polypropylene or polystyrene, a metal substrate, an alloy substrate, a ceramic substrate, and a laminated substrate thereof. The substrate 12 preferably has an optical transparency, and more preferably has an excellent optical transparency in a visible light range. Furthermore, the substrate 12 preferably has flexibility. In this case, various configurations of structures can be provided taking advantage of the flexibility.

Moreover, there is not any special restriction on a technique for imparting conductivity to the surface of the substrate 12 to form the conductive surface 12a, and examples of the technique include a method using the substrate 12 having the conductivity, and a method to form a transparent conductive film on the substrate 12 as in a conductive PET film. There is not any special restriction on the latter transparent conductive film, but it is preferable to use FTO obtained by doping $SnO_2$ with fluorine in addition to ITO, $SnO_2$ and $InO_3$. There is not any special restriction on a method for forming such a transparent conductive film, and a known technique such as an evaporation process, a CVD process, a spray process, a spin coat process or an immersion process can be applied. A thickness of the film can appropriately be set.

Furthermore, an intermediate layer 13 may be provided between the conductive surface 12a and the dye-supported layer 14. The intermediate layer 13 preferably has an optical transparency, and further preferably has conductivity. There is not any special restriction on a material of the intermediate layer 13, and examples of the material include zinc oxide, and a metal oxide described above in the transparent conductive film. The intermediate layer 13 may be used as shown in the drawing, and may beforehand be deposited. However, the intermediate layer 13 does not have to be provided.

The dye-supported layer 14 is a composite structure in which a dye is supported on a porous semiconductor layer substantially constituted of zinc oxide, and has a plurality of bump-like protrusions 14a formed so that the protrusions protrude (grow) radially and externally (upwardly in the drawing) from the side of the conductive surface 12a of the substrate 12. Such a peculiar structure is provided, whereby an adsorption site area of the dye to be co-adsorbed increases. Moreover, the co-adsorption and the re-adsorption of the dyes can be effectively made, so that the dye replacement property improve. A property of this dye-supported layer 14 can be observed by sectional SEM photography, sectional TEM photography or the like as described later. It is to be noted that "substantially constituted of zinc oxide" means that zinc oxide is a main component. The layer may include zinc oxide having a composition ratio different from that of strictly stoichiometric zinc oxide (ZnO), and may contain zinc hydroxide as an unavoidable component, a slight amount of unavoidable impurities such as another metal salt and hydrate and the like.

There is not any special restriction on the dye to be supported on the dye-supported layer 14, and the dye may be a water-soluble dye, a water-insoluble dye or an oil-soluble dye. From a viewpoint that an amount of the dye to be supported be increased, the dye preferably has anchor group(s) which interacts with zinc oxide. Specific examples of the dye include xanthein-based dyes such as eosin-Y, coumarin-based dyes, triphenyl methane-based dyes, cyanine-based dyes, merocyanine-based dyes, phthalocyanine-based dyes, porphyrin-based dyes, and polypyridine metal complex dyes. In addition, the examples include ruthenium bipyridium-based dyes, azo dyes, quinone-based dyes, quinonimine-based dyes, quinacridone-based dyes, squarium-based dyes, perylene-based dyes, indigo-based dyes, and naphthalocyanine-based dyes, which have carboxylic group(s), sulfonic group(s) or phosphoric group(s).

Moreover, there is not any special restriction on a film thickness of the dye-supported layer 14, but the thickness is preferably 1 to 15 μm, more preferably 2 to 10 μm. When this film thickness is less than 1 μm, the dye is not sufficiently supported, whereby a short-circuit photoelectric current density ($J_{SC}$) is sometimes lowered. When the thickness exceeds 15 μm, there are disadvantages that the film strength becomes insufficient or that the fill factor (ff) lowers.

Furthermore, the dye-supported layer 14 satisfies a relation represented by the following formula (1):

$$2 \le I_{002}/I_{101} \le 12 \; \ldots \; (1),$$

in which $I_{002}$ is a peak intensity attributed to a zinc oxide (002) face in X-ray diffraction measurement of the dye-supported layer 14 (the dye-supported layer 14 and the intermediate layer 13, in a case that the intermediate layer 13 is constituted of the same material as that of the dye-supported layer 14. This applies to both $I_{101}$ and $I_{002}$ described hereinafter), and $I_{101}$ is a peak intensity attributed to a zinc oxide (101) face in the X-ray diffraction measurement.

As shown in FIG. 1, this X-ray diffraction measurement is performed from a direction (a z-arrow direction shown in the drawing) vertical to an extending surface of the substrate 12. A peak intensity ratio $I_{002}/I_{101}$ is one of indexes indicating that c-axis orientation is weak at a time when a value of the ratio is small and that the c-axis orientation is strong at a time when the value is large. In general, with regard to polycrystalline zinc oxide having a powder state, the intensity $I_{101}$ of the diffraction peak of the (101) face shows a maximum diffraction intensity, and the peak intensity ratio $I_{002}/I_{101}$ is less than 1, usually about 0.1 to 0.5.

On the other hand, the peak intensity ratio of the dye-supported layer 14 is in a range represented by the above formula (1), whereby a porous structure having an excellent dye replacement property and a large amount of the dye to be supported can be realized. That is, when the peak intensity ratio $I_{002}/I_{101}$ is less than 2, there is a disadvantage that an electron collection ability runs short in an operating electrode owing to a low c-axis orientation. Specifically, there is a disadvantage that $J_{SC}$ lowers. When the ratio exceeds 12, there is a disadvantage that $J_{SC}$ lowers owing to lack of the amount of the dye to be supported.

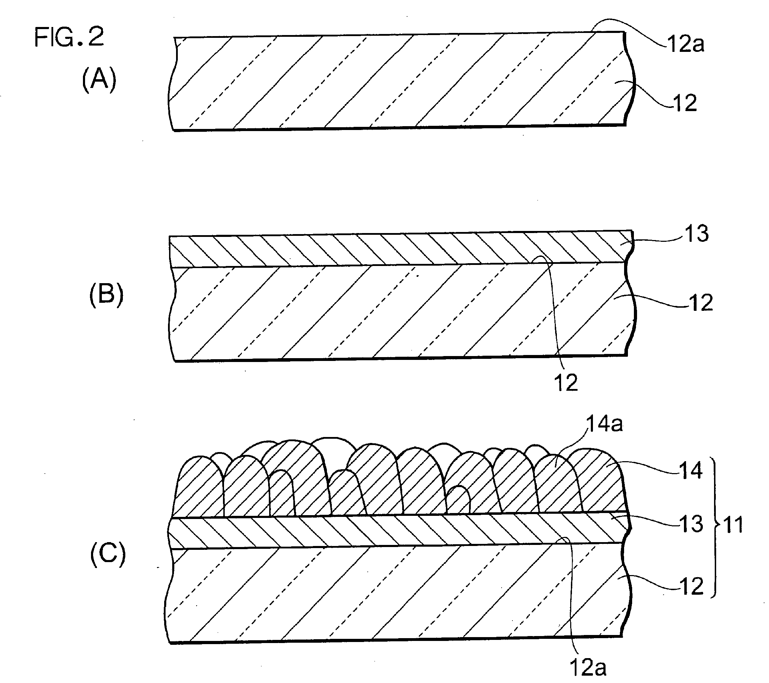

A manufacturing method of the electrode 11 will hereinafter be described. FIGS. 2A to 2C are step diagrams showing that the electrode 11 is manufactured. The electrode 11 is prepared by a step (FIG. 2A) of preparing the substrate 12, and a metal oxide layer forming step including a step of forming the intermediate layer 13 on the substrate 12 (FIG. 2B) and a dye-supported layer forming step of forming the dye-supported layer 14 including zinc oxide and a dye on the substrate (FIG. 2C). Here, a method for forming a film of the dye-supported layer 14 on the substrate 12 by use of a cathode electrolytic deposition process will be described.

<Surface Treatment of Substrate>

First, conductivity is imparted to one surface of the substrate 12 by the above-mentioned appropriate method to form the conductive surface 12a (FIG. 2A). It is to be noted that when the substrate 12 beforehand having the conductivity, for example, a metal plate is used as the substrate 12, the step of imparting the conductivity is unnecessary. Subsequently, prior to formation of the intermediate layer 13, the conductive surface 12a of the substrate 12 is subjected to an appropriate surface modification treatment, if necessary. Specific examples of the treatment include a known surface treatment such as a degreasing treatment with a surfactant, an organic solvent or an alkaline aqueous solution, a mechanical polishing treatment, an immersion treatment in an aqueous solution, a preliminary electrolysis treatment with an electrolyte, a washing treatment and a drying treatment.

<Intermediate Layer Forming Step>

The intermediate layer 13 is formed by precipitating or depositing, for example, zinc oxide, the metal oxide described above in the transparent conductive film or the like on the conductive surface 12a of the substrate 12 by a known technique such as an evaporation process, a CVD process, a spray process, a spin coat process, an immersion process or a an electrolytic deposition process.

<Dye-SUPPORTED Layer Forming Step>

Subsequently, the dye-supported layer 14 is formed on the intermediate layer 13 by a cathode electrolytic deposition process. Specifically, the intermediate layer 13 of the substrate 12 is disposed so as to face a counter electrode in an electrolyte including zinc salt and a first dye, and a predetermined voltage is applied between the intermediate layer 13 of the substrate and the counter electrode by use of a reference electrode according to an ordinary process, thereby the dye-supported layer 14 is formed by electrolytic deposition (FIG. 2C).

As the electrolyte for use herein, an aqueous solution containing zinc salt and having a pH of about 4 to 9 is preferably used. A small amount of an organic solvent may be added to this electrolyte. There is not any special restriction on zinc salt as long as the zinc salt is a zinc ion source capable of supplying zinc ions in the solution. Examples of the zinc salt for preferable use include zinc halides such as zinc chloride, zinc bromide and zinc iodide, zinc nitrate, zinc sulfate, zinc acetate, zinc peroxide, zinc phosphate, zinc pyrophosphate, and zinc carbonate. A zinc ion concentration in the electrolyte is preferably 0.5 to 100 mM, more preferably 2 to 50 mM. Moreover, the above electrolyte to which the first dye to be co-adsorbed is further added is preferably used.

There is not any special restriction on an electrolysis method, and a diode or triode system may be applied. As an energization system, a direct current may be supplied, or a constant potential electrolysis process or a pulse electrolysis process may be used. As the counter electrode, platinum, zinc, gold, silver, graphite or the like may be used according to an ordinary process. Among them, zinc or platinum is preferably used.

A reduction electrolysis potential may appropriately be set in a range of preferably -0.8 to -1.2 V (vs. Ag/AgCl), more preferably -0.9 to -1.1 V (vs. Ag/AgCl). The reduction electrolysis potential is in this range, whereby the dye-supported layer 14 including a porous structure having an excellent dye replacement property and a large amount of the dye to be supported, and satisfying the relation represented by the above formula (1) can effectively be formed. That is, when the reduction electrolysis potential is above -0.8 V, the film becomes denser than necessary, and there is a disadvantage that the amount of the dye to be supported runs short. When the potential is less than -1.2 V, there are disadvantages that the oxide becomes more metallic to lower an electric property and that the adhesion of the film to the substrate deteriorates. When the electrolyte includes zinc halide, an electrolytic deposition reaction of zinc oxide due to reduction of dissolved oxygen in the aqueous solution is promoted, so that oxygen is, for example, bubbled to preferably sufficiently introduce required oxygen. It is to be noted that a bath temperature of the electrolyte can be set to a broad range in consideration of the thermal resistance of the substrate 12 for use, and the temperature is usually preferably 0 to 100°C, more preferably about 20 to 90°C.

The first dye for use in this electrolytic deposition step is co-adsorbed by the cathode electrolytic deposition process, so that the dye is preferably dissolved or dispersed in the electrolyte. When an aqueous solution containing the zinc salt and having a pH of about 4 to 9 is used as the electrolyte, a water-soluble dye is preferable.

Specifically, from a viewpoint that the amount of the dye to be supported be increased, the first dye preferably has anchor group(s) which interacts with the surface of zinc oxide, and is preferably a water-soluble dye having anchor group(s) such as a carboxyl group, a sulfonic group or a phosphoric group. More specific examples of the dye include xanthein-based dyes of eosin-Y or the like, coumarin-based dyes, triphenyl methane-based dyes, cyanine-based dyes, merocyanine-based dyes, phthalocyanine-based dyes, porphyrin-based dyes, and polypyridine metal complex dyes.

Moreover, a concentration of the dye in the electrolyte may appropriately be set in a range of 50 to 500 $\mu$M, but is more preferably 70 to 300 $\mu$M. When this dye concentration is less than 50 $\mu$M, the film becomes denser than necessary, and there is a disadvantage that the amount of the dye to be supported runs short. When the concentration exceeds 500 $\mu$M, the density of the film lowers more than necessary, and there is similarly a disadvantage that the amount of the dye to be supported runs short.

The dye-supported layer 14 obtained on the above conditions is usually a structure having a plurality of bump-like protrusions formed so that crystals of zinc oxide protrude radially from the surface of the substrate 12, and having appropriate denseness and porosity. Moreover, the plurality of bump-like protrusions defines an uneven (concavo-convex) shape of the surface of the layer. Afterward, the dye-supported layer 14 is subjected to a known post-treatment such as washing, drying and the like according to an ordinary process, if necessary.

The electrode 11 obtained in this manner has a composite structure in which the first dye is co-adsorbed on the surface of zinc oxide, and may be used as a discrete electrode having an excellent dye replacement property and a large amount of the dye to be supported, a photoelectric conversion element, or a precursor of the element. In a case where this electrode 11 is used as the photoelectric conversion element, it is preferable that the following dye desorption treatment and dye re-adsorption treatment are performed in order to further improve a photoelectric conversion efficiency of the element.

<Dye Desorption Step>

Here, first of all, the first dye co-adsorbed on the dye-supported layer 14 of the electrode 11 is desorbed. Specific examples of this step include a simple technique to immerse and treat the electrode 11 including the first dye in an alkaline aqueous solution containing of sodium hydroxide, potassium hydroxide or the like and having a pH of about 9 to 13. As this alkaline aqueous solution, a heretofore known solution may be used, and can appropriately be selected in accordance with a type of the first dye to be desorbed.

Moreover, in this desorption treatment, it is preferable to desorb preferably 80% or more, more preferably 90% or more of first dye in the dye-supported layer 14. It is to be noted that there is not any special restriction on an upper limit of a desorption ratio of the first dye, but the upper limit is substantially 99%, because it is actually difficult to completely desorb the first dye incorporated in zinc oxide crystals. The desorption treatment is preferably performed while heating, because a desorption efficiency can effectively be raised.

Afterward, a greater part of the first dye is desorbed from the electrode 11 obtained by performing a known post-treatment such as washing, drying and the like according to an ordinary process if necessary, and the electrode 11 may be used as a discrete electrode having an excellent dye replacement property, a discrete electrode potentially having a large latent amount of the dye to be supported, or the precursor of the photoelectric conversion element.

<Dye Re-adsorption Step>

As described above, a desired second dye can be re-adsorbed on the dye-supported layer 14 obtained by the desorption treatment of the first dye. Specific examples of this step include a simple technique to immerse the substrate 12 having the dye-supported layer 14 obtained by the desorption treatment of the first dye in a dye-containing solution including the second dye to be re-adsorbed. A solvent of the dye-containing solution for use here can appropriately be selected from known solvents such as water, an ethanol-based solvent and a ketone-based solvent in accordance with solubility, compatibility or the like with respect to the desired second dye.

As the second dye to be re-adsorbed, a dye having a desired light absorption band and absorption specrum can appropriately be selected in accordance with a property required for the photoelectric conversion element. According to the treatment of this dye re-adsorption step, the first dye co-adsorbed by the electrolytic deposition step during the formation of the dye-supported layer can be replaced with the second dye different from the first dye, and a sensitizing dye more highly sensitive than the first dye is used as the second dye, whereby a performance of the photoelectric conversion element can be improved.

Here, unlike the first dye beforehand co-adsorbed, the second dye is not limited in accordance with the type of the electrolyte. Besides the above-mentioned water-soluble dye, for example, a solvent for use in the dye-containing solution is appropriately selected, whereby a water-insoluble and/or oil-soluble dye can be used. In addition to the water-soluble dye exemplified above as the first dye to be co-adsorbed, more specific examples of the second dye include ruthenium bipyridium-based dyes, azo dyes, quinone-based dyes, quinonimine-based dyes, quinacridone-based dyes, squarium-based dyes, cyanine-based dyes, merocyanine-based dyes, triphenyl methane-based dyes, xanthein-based dyes, porphyrin-based dyes, coumarin-based dyes, phthalocyanine-based dyes, perylene-based dyes, indigo-based dyes, and naphthalocyanine-based dyes. From a viewpoint that the dye be re-adsorbed by the dye-supported layer 14, it is more preferable that the dye has anchor group(s) such as a carboxyl group, a sulfonic group or a phosphoric group which interacts with the surface of zinc oxide.

The electrode 11 subsequently subjected to a known post-treatment such as washing, drying and the like according to an ordinary process if necessary is a composite structure in which the second dye is adsorbed by the surface of zinc oxide, and can appropriately be used as a discrete electrode having a large amount of the dye to be supported and further improved photoelectric conversion efficiency, or the photoelectric conversion element.

(Second Embodiment)

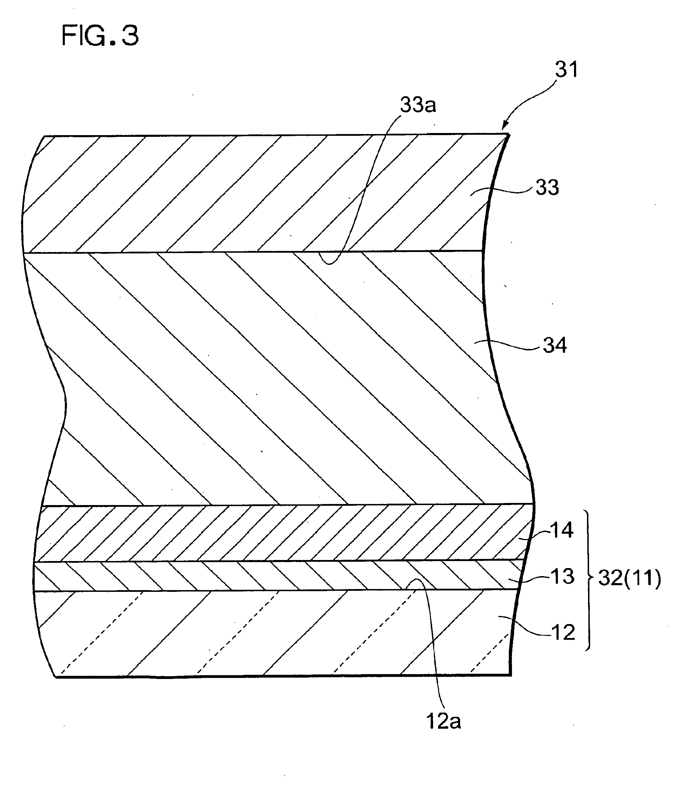

FIG. 3 is a schematic sectional view schematically showing one embodiment of a solar cell according to the present invention. A dye-sensitized solar cell 31 (the solar cell) includes an electrode 11 described above in the first embodiment, as a photoelectric conversion electrode (element), and has a photoelectric conversion electrode 32 (the electrode 11), a counter electrode 33 disposed so as to face the electrode 32, and a charge transport layer 34 disposed between the photoelectric conversion electrode 32 and the counter electrode 33.

The counter electrode 33 is disposed so that a conductive surface 33a of the counter electrode faces a dye-supported layer 14. As the counter electrode 33, a known electrode may appropriately be employed. For example, in the same manner as in a substrate 12 of the electrode 11 having a conductive surface 12a, there may be used an electrode having a conductive film on a transparent substrate, an electrode in which a film of a metal, carbon, a conductive polymer or the like is further formed on the conductive film of the transparent substrate or the like.

As the charge transport layer 34, a layer usually for use in a cell, a solar cell or the like may appropriately be used. For example, there may be used a redox electrolyte, a semi-solid electrolyte obtained by gelating the redox electrolyte or a film formed of a p-type semiconductor solid hole transport material.

Here, when the solution-based or semi-solid-based charge transport layer 34 is used, according to an ordinary process, the photoelectric conversion electrode 32 is disposed away from the counter electrode 33 via a spacer (not shown) or the like, and a periphery of the arranged electrodes is sealed to define a sealed space, followed by introducing an electrolyte into the space. Examples of a typical electrolyte of the dye-sensitized solar cell include an acetonitrile solution, an ethylene carbonate solution, a propylene carbonate solution and a mixed solution thereof, which include iodine and iodide or bromine and bromide. Furthermore, a concentration of the electrolyte, various additives and the like can appropriately be set and selected in accordance with a required performance. For example, halides, an ammonium compound or the like may be added.

[Examples]

The present invention will hereinafter be described in detail with respect to examples, but the present invention is not limited to these examples.

(Examples 1 to 5, Comparative Examples 1 to 5)

First, as a substrate, a transparent glass substrate (TCO: manufactured by Asahi Glass Co., Ltd.) having a transparent conductive film of SnO doped with fluorine was disposed so as to face a Pt electrode as a counter electrode in 0.1 M of KCl electrolyte, and preliminary electrolysis was performed while bubbling $O_2$ at 0.3 L/min. At this time, electrolysis conditions were set to a potential of -1.0 V (vs. Ag/AgCl) and a total coulomb amount of -2.35 C. This preliminary electrolysis was performed in order to modify the electrolyte and the surface of the substrate owing to reduction of dissolved oxygen included in the electrolyte.

Subsequently, the counter electrode was changed to a Zn electrode, and an aqueous solution of $ZnCl_2$ was added to the electrolyte to set a Zn concentration to 5 mM, followed by performing cathode electrolytic deposition to precipitate zinc oxide on the transparent conductive film of the transparent glass substrate, thereby an intermediate layer was formed. At this time, electrolysis conditions were set to a potential of -0.8 V (vs. Ag/AgCl) and a total coulomb amount of -0.4 C.

Afterward, eosin-Y (a first dye) was added to the electrolyte so as to obtain each concentration shown in Table 1, and then cathode electrolytic deposition was performed to form, on the intermediate layer, a film of a dye-supported layer as a composite structure of zinc oxide and eosin-Y. Electrolysis conditions are integrally shown in Table 1.

Subsequently, the resultant electrode was washed, dried, and then immersed in a KOH aqueous solution to desorb eosin-Y as the co-adsorbed dye in the dye-supported layer, followed by performing again washing and drying treatments.

On the other hand, as a dye (a second dye)-containing solution, a t-BuOH/$CH_3$CN solution at a volume ratio of 1:1 containing a sensitizing dye (D149: manufactured by Mitsubishi Paper Mills, Ltd.): 500 μM and cholic acid: 1 mM was prepared, and the electrode from which eosin-Y was desorbed was immersed in this dye-containing solution to re-adsorb the sensitizing dye D149 on the dye-supported layer. Afterward, the washing and drying treatments were performed to obtain electrodes of Examples 1 to 5 and Comparative Examples 1 to 5.

[Orientation Evaluation]

X-ray diffraction measurement of the electrodes obtained in Examples 1 to 5 and Comparative Examples 1 to 5 was performed using MXP18A manufactured by Mac Science Co., Ltd. Conditions during the measurement were set to a linear source of Cu and a scanning range 2θ of 20 to 70°.
A peak intensity ratio $I_{002}/I_{101}$ was calculated from a peak intensity of a (002) face of 2θ nearly equal to 34.4° of the resultant profile data and a peak intensity of a (101) face of 2θ nearly equal to 36.2° to evaluate an orientation of zinc oxide. Evaluation results are also shown in Table 1.

It is to be noted that as reference data, the X-ray diffraction measurement of powder-like polycrystalline zinc oxide (manufactured by Kanto Kagaku Kabushiki Kaisha) was similarly performed to calculate the peak intensity ratio $I_{002}/I_{101}$, and the ratio was 0.44.

[Cell Evaluation]

A dye-sensitized solar cell having a structure similar to that of a dye-sensitized solar cell 31 shown in FIG. 3 was prepared by the following procedure. First, the electrodes of Examples 1 to 5 and Comparative Examples 1 to 5 were used as photoelectric conversion element. A Pt thin film having a thickness of 100 nm was formed by sputtering on a transparent glass substrate (TCO: manufactured by Asahi Glass Co., Ltd.) having a transparent conductive film of SnO doped with fluorine, and the resultant substrate was used as a counter electrode. The photoelectric conversion element was disposed so as to face the counter electrode via a spacer thickness of 50 μm. Then, as an electrolyte of a charge transport layer, an acetonitrile solution including iodine: 0.05 M and tetrapropyl ammonium iodide (TPAI): 0.5 M was introduced into a sealed space. Table 1 also shows an evaluation result of a photoelectric conversion efficiency obtained from each dye-sensitized solar cell (measurement conditions: AM-1.5).

[Table 1]

| | Eosin concentration (μM) | Potential (V) | Coulomb amount (C) | Orientation 002/101 | Conversion efficiency (%) |
|---|---|---|---|---|---|
| Example 1 | 90 | -1.0 | -1.3 | 3.1 | 4.1 |
| Example 2 | 90 | -1.0 | -2.6 | 8.9 | 5.1 |

(continued)

|  | Eosin concentration ($\mu$M) | Potential (V) | Coulomb amount (C) | Orientation 002/101 | Conversion efficiency (%) |
|---|---|---|---|---|---|
| Example 3 | 180 | -1.0 | -1.3 | 4.3 | 5.2 |
| Example 4 | 180 | -0.8 | -1.3 | 7.8 | 4.4 |
| Example 5 | 270 | -1.0 | -1.3 | 2.8 | 4.9 |
| Comparative Example 1 | 45 | -1.0 | -1.3 | 18.8 | 2.1 |
| Comparative Example 2 | 45 | -0.7 | -1.3 | 25.2 | 1.1 |
| Comparative Example 3 | 90 | -0.7 | -1.3 | 18.2 | 1.2 |
| Comparative Example 4 | 180 | -0.7 | -1.3 | 13.2 | 1.5 |
| Comparative Example 5 | 270 | -0.7 | -1.3 | 12.8 | 1.2 |
| Reference data | - | - | - | 0.44 | - |

It has been confirmed from the results shown in Table 1 that the photoelectric conversion efficiency is largely improved in Examples 1 to 5 of the present invention in which the peak intensity ratio $I_{002}/I_{101}$ is in a range of 2 to 12 as compared with Comparative Examples 1 to 5 in which the peak intensity ratio $I_{002}/I_{101}$ is larger than 12.

[Structure Evaluation]

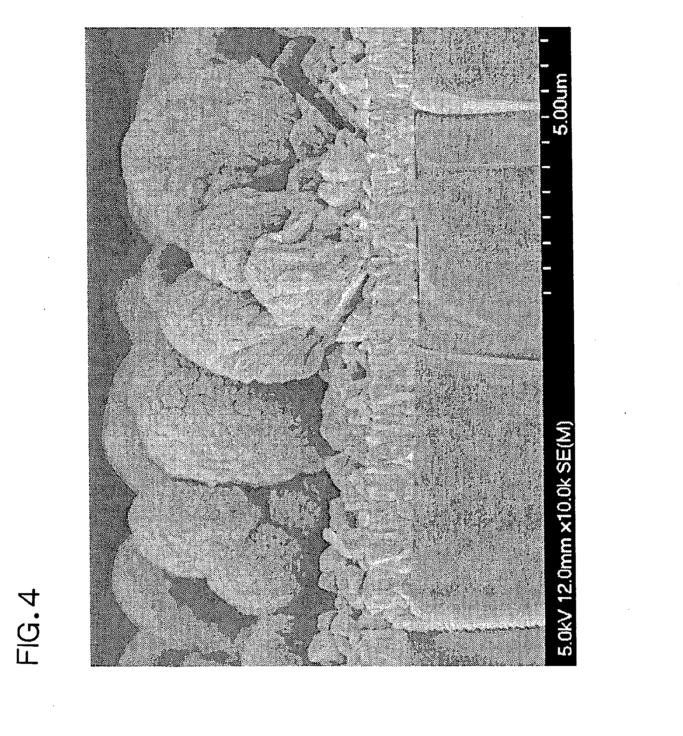

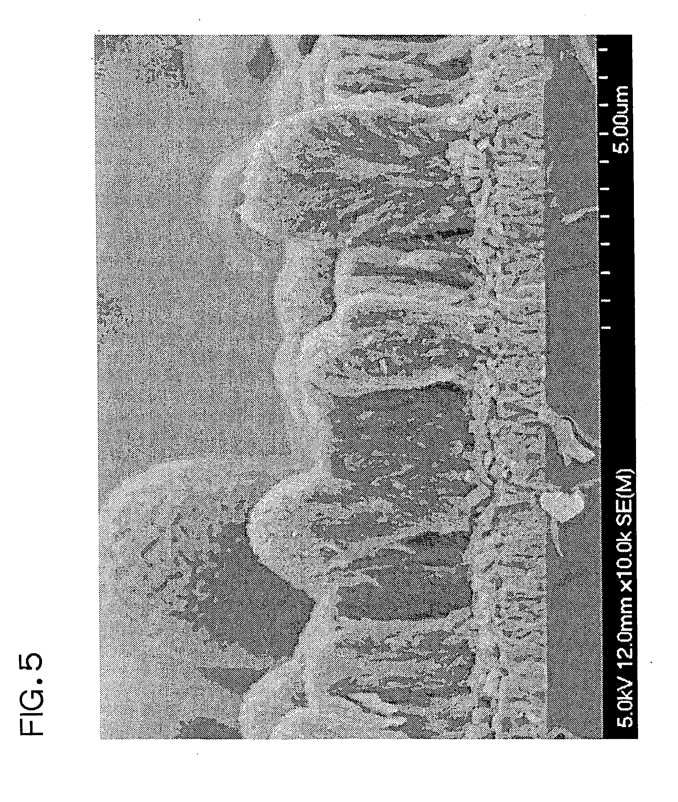

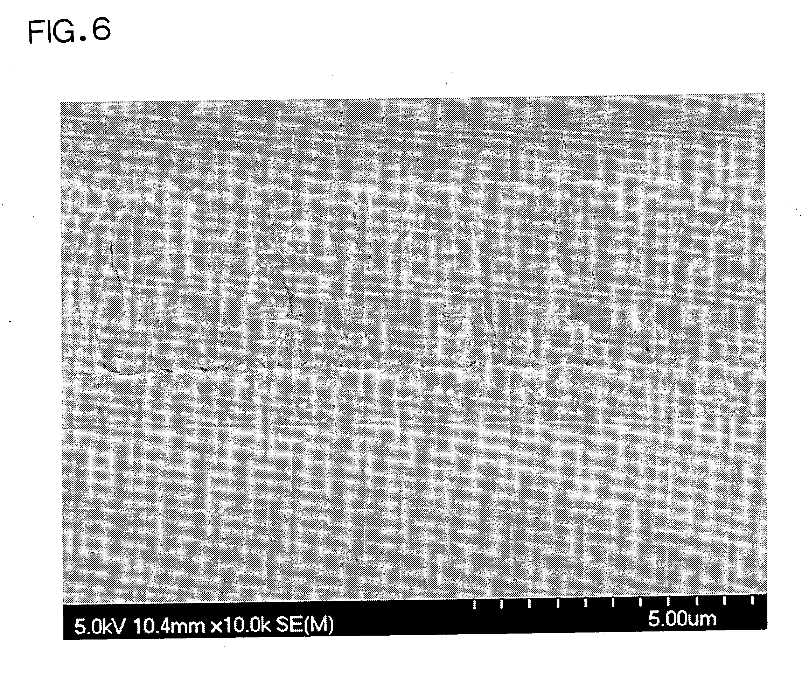

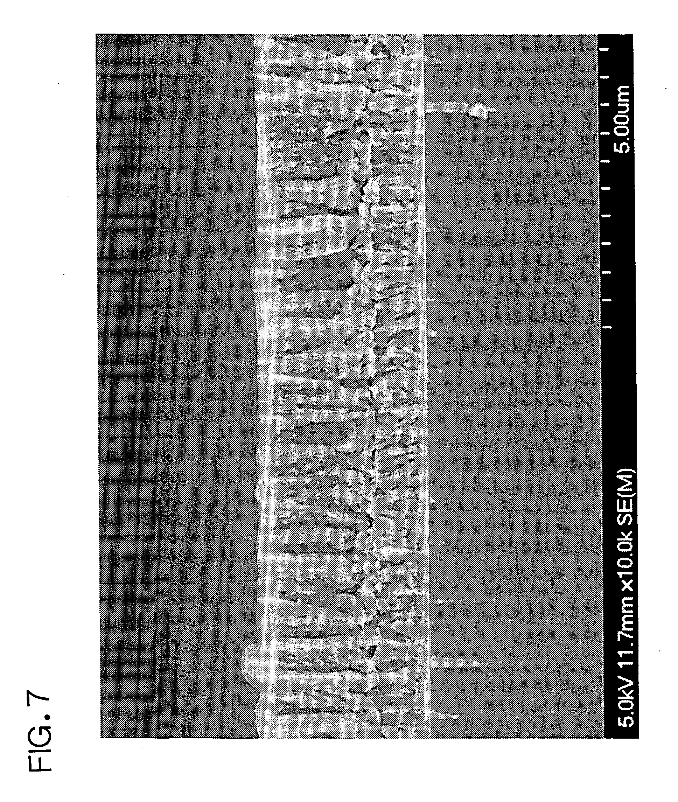

Sections of the electrodes obtained in Examples 1, 3 and Comparative Examples 1, 4 were observed with an electron microscope. FIGS. 4 to 7 are sectional SEM photographs of the electrodes according to Examples 1, 3 and Comparative Examples 1, 4. It has been seen from these photographs that the dye-supported layer of the electrode according to each of Examples 1, 3 is a structure having a plurality of raised portions referred to as bump-like protrusions formed so that zinc oxide protrudes radially from a substrate side and that these bump-like protrusions form an uneven surface. On the other hand, it has been seen that a dye-supported layer of the electrode according to each of Comparative Examples 1, 4 is a structure in which crystals of zinc oxide substantially uniformly anisotropically grow into a columnar shape and that the surface of the layer is substantially flat.

It is to be noted that as described above, the present invention is not limited to the above embodiments and examples, and can appropriately be modified within the scope of the present invention.

As described above, according to an electrode, a manufacturing method of the electrode, and a dye-sensitized solar cell of the present invention, a dye replacement property and an amount of a dye to be supported can be improved, and high photoelectric conversion efficiency can be realized. In addition, productivity and economical efficiency can be improved, so that the present invention can broadly and effectively be used in electronic and electric materials and devices having various electrodes and/or photoelectric conversion elements, and various apparatuses, equipments and systems including these materials and devices.

The present application is based on Japanese priority application No. 2007-086254 filed on March 29, 2007, the entire contents of which are hereby incorporated by reference.

**Claims**

1. An electrode comprising:

a substrate; and
a metal oxide layer having a dye-supported layer formed on the substrate, the dye-supported layer including zinc oxide and a dye,
wherein the metal oxide layer satisfies a relation represented by the following formula (1) :

$$2 \leq I_{002}/I_{101} \leq 12 \quad \dots \quad (1),$$

in which $I_{002}$ is a peak intensity attributed to a zinc oxide (002) face in X-ray diffraction measurement of the metal oxide layer, and

$I_{101}$ is a peak intensity attributed to a zinc oxide (101) face in the X-ray diffraction measurement of the metal oxide layer.

2. An electrode comprising:

a substrate; and
a metal oxide layer having a dye-supported layer formed on the substrate, the dye-supported layer including zinc oxide and a dye,
wherein the dye-supported layer has a plurality of bump-like protrusions formed so that zinc oxide radially protrudes from the surface of the substrate.

3. The electrode according to claim 1 or 2, wherein in the dye-supported layer, at least a part of the dye is supported on the surface of zinc oxide.

4. A dye-sensitized solar cell, comprising:

an electrode;
a counter electrode disposed so as to face the electrode; and
a charge transport layer disposed between the electrode and the counter electrode,
wherein the electrode includes:

a substrate; and
a metal oxide layer having a dye-supported layer formed on the substrate, the dye-supported layer including zinc oxide and a dye, and
the metal oxide layer satisfies a relation represented by the following formula (1):

$$2 \leq I_{002}/I_{101} \leq 12 \quad \dots \quad (1),$$

in which $I_{002}$ is a peak intensity attributed to a zinc oxide (002) face in X-ray diffraction measurement of the metal oxide layer, and

$I_{101}$ is a peak intensity attributed to a zinc oxide (101) face in the X-ray diffraction measurement of the metal oxide layer, or

the dye-supported layer has a plurality of bump-like protrusions formed so that zinc oxide radially protrudes from the surface of the substrate.

5. A manufacturing method of an electrode, comprising:

a step of preparing a substrate; and
a metal oxide layer forming step having a dye-supported layer forming step of forming a dye-supported layer including zinc oxide and a dye on the substrate,
wherein the metal oxide layer forming step forms, as a metal oxide layer, a layer which satisfies a relation represented by the following formula (1):

$$2 \leq I_{002}/I_{101} \leq 12 \quad \dots \quad (1),$$

in which $I_{002}$ is a peak intensity attributed to a zinc oxide (002) face in X-ray diffraction measurement of the metal oxide layer, and

$I_{101}$ is a peak intensity attributed to a zinc oxide (101) face in the X-ray diffraction measurement of the metal oxide layer, or
a layer having a plurality of bump-like protrusions formed so that zinc oxide of the dye-supported layer protrudes radially from the surface of the substrate.

6. A manufacturing method of an electrode comprising:

a step of preparing a substrate and a counter electrode; and
a metal oxide layer forming step having an electrolytic deposition step of forming, on the substrate, a dye-supported layer including zinc oxide and a first dye by electrolytic deposition,
wherein the electrolytic deposition step arranges the substrate and the counter electrode so that the substrate faces the counter electrode in an electrolyte including zinc salt and the first dye and having a dye concentration of 50 to 500 $\mu$M, and applies a voltage of -0.8 to -1.2 V (vs. Ag/AgCl) between the substrate and the counter electrode, whereby zinc oxide is electrolytically deposited on the substrate, and the dye is co-adsorbed to form the dye-supported layer.

7. The manufacturing method of the electrode according to claim 6, which further comprises:

a dye desorption step of desorbing the first dye co-adsorbed on the dye-supported layer; and
a dye re-adsorption step of allowing the dye-supported layer to support a second dye different from the first dye.

FIG. 1

EP 1 978 136 A1

FIG.2

(A)

12a
12

(B)

13
12
12

(C)

14
13
11
14a
12
12a

# FIG.3

FIG. 4

5.0kV 12.0mm x10.0k SE(M)　　5.00um

FIG. 5

5.0kV 12.0mm x10.0k SE(M)                    5.00um

FIG.6

5.0kV 10.4mm x10.0k SE(M)  5.00um

FIG.7

5.0kV 11.7mm x10.0k SE(M)                                   5.00um

EP 1 978 136 A1

**European Patent Office**

Application Number

EP 08 00 5872

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | T. YOSHIDA, H MINOURA: "Electrochemical Self-Assembly of Dye-Modified Zinc Oxide Thin Films" ADV. MAT., vol. 12, no. 16, 16 August 2000 (2000-08-16), pages 1219-1222, XP002487110 DE ISSN: 0935-9648 * abstract * * page 1220, right-hand column * | 2,5-7 | INV. C25D9/08 C25D15/02 C25B11/03 C25B11/04 H01G9/042 H01G9/20 H01L31/0216 H01L31/0224 H01L31/0236 |
| X | YOSHIDA T ET AL: "Cathodic electrodeposition of ZnO/EosinY hybrid thin films from dye added zinc nitrate bath and their photoelectrochemical characterizations" ELECTROCHEMISTRY, ELECTROCHEMISTRY SOCIETY OF JAPAN, TOKYO, JP, vol. 70, no. 6, 1 June 2002 (2002-06-01), pages 470-487, XP008037409 * the whole document * | 2,5,6 | |
| X | EP 1 500 721 A (INST NAGOYA IND SCIENCE RES [JP]) 26 January 2005 (2005-01-26) * abstract * * paragraphs [0010], [0013], [0014], [0025], [0026], [0030] - [0033] * | 2,5-7 | TECHNICAL FIELDS SEARCHED (IPC) C25D C25B H01G H01L |
| X | JP 2002 184476 A (SHARP KK) 28 June 2002 (2002-06-28) * abstract * * paragraphs [0016] - [0020], [0024] - [0026] * | 2,5-7 | |

-/--

The present search report has been drawn up for all claims

| Place of search | Date of completion of the search | Examiner |
|---|---|---|
| Munich | 7 July 2008 | Haering, Christian |

EPO FORM 1503 03.82 (P04C01)

**European Patent Office**

## EUROPEAN SEARCH REPORT

Application Number

EP 08 00 5872

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/134426 A1 (CHIBA YASUO [JP] ET AL) 26 September 2002 (2002-09-26) <br> * abstract * <br> * paragraphs [0022] - [0027], [0044], [0046], [0061] * <br> ----- | 2,5-7 | |
| X | WO 2005/017957 A (UNIV CALIFORNIA [US]; YANG PEIDONG [US]; GREENE LORI E [US]; LAW MATTH) 24 February 2005 (2005-02-24) <br> * paragraphs [0018], [0041], [0065], [0132], [0133] * <br> ----- | 1-4 | |

TECHNICAL FIELDS
SEARCHED     (IPC)

The present search report has been drawn up for all claims

| Place of search | Date of completion of the search | Examiner |
|---|---|---|
| Munich | 7 July 2008 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 00 5872

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2008

| Patent document cited in search report | | Publication date | Patent family member(s) | | Publication date |
|---|---|---|---|---|---|
| EP 1500721 | A | 26-01-2005 | AU | 2003227271 A1 | 13-10-2003 |
| | | | WO | 03083183 A1 | 09-10-2003 |
| | | | JP | 3883120 B2 | 21-02-2007 |
| | | | JP | 2004006235 A | 08-01-2004 |
| | | | US | 2006162765 A1 | 27-07-2006 |
| JP 2002184476 | A | 28-06-2002 | NONE | | |
| US 2002134426 | A1 | 26-09-2002 | NONE | | |
| WO 2005017957 | A | 24-02-2005 | US | 2007194467 A1 | 23-08-2007 |
| | | | US | 2005009224 A1 | 13-01-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002184476 A
- JP 2004006235 A

- JP 2007086254 A

**Non-patent literature cited in the description**

- **S. PEULON et al.** *J. Electrochem. Soc.,* 1998, vol. 145, 864

- **T. YOSHIDA et al.** *Electrochemistry,* 2002, vol. 70, 470